# EUROPÄISCHE PATENTANMELDUNG

(11) **EP 4 104 943 A1**
(43) Veröffentlichungstag der Anmeldung: **21.12.2022**
(21) Anmeldenummer: 22173421.3
(22) Anmeldetag: 16.05.2022
(51) Int. Cl.: B09B 3/20

(54) **VERFAHREN ZUM VERWERTEN EINES FLÜGELS EINER WINDKRAFTANLAGE**

(30) Priorität: 15.06.2021 DE 102021115498
(71) Anmelder: RHM Rohstoff-Handelsgesellschaft mbH, 45478 Mühlheim a. d. Ruhr (DE)
(72) Erfinder: Detmer, Bernd, 49186 Bad Iburg (DE)
(74) Vertreter: Gosdin, Carstensen & Partner Patentanwälte Partnerschaftgesellschaft mbB

(57) **Zusammenfassung**

Die Erfindung betrifft ein Verfahren zum Verwerten eines Flügels (1) einer Windkraftanlage, wobei der Flügel (1) zwecks Verstärkung Kohlenstofffasern aufweist. Um zu ermöglichen, dass eine Entsorgung der Flügel ohne gesundheitliche Gefährdung erfolgen kann, und gleichermaßen das Fasermaterial der Flügel vorteilhaft zu nutzen, sieht das Verfahren die Schritte vor: a) Zuführen des Flügels (1) zu einer mechanischen Bearbeitungseinheit (2); b) Abscheren oder Absägen von Teilen (3) des Flügels (1) in der mechanischen Bearbeitungseinheit (2) mittels einer Schere (4) oder einer Säge; c) Versiegeln zumindest eines Abschnitts der Scher- oder Sägefläche (5) des Teils (3) durch Aufbringung eines Hilfsstoffs in der mechanischen Bearbeitungseinheit (2); d) Ausbringen der Teile (3) aus der mechanischen Bearbeitungseinheit (2); e) Verbringen der Teile (3) zu einer schmelzmetallurgischen Anlage (6), in der eine metallische Schmelze (7) erzeugt wird; f) Einbringen einer Anzahl von Teilen (3) in die metallische Schmelze (7).

## Beschreibung

Die Erfindung betrifft ein Verfahren zum umweltgerechten Verwerten eines Flügels einer Windkraftanlage, wobei der Flügel zwecks Verstärkung Kohlenstofffasern aufweist.

Die Flügel von Windkraftanlagen müssen zur Sicherstellung einer hinreichenden mechanischen Festigkeit stabil ausgeführt sein, weshalb zumeist Kohlenstofffasern in das Material des Flügels integriert werden. Damit erhält der Flügel die benötigte hohe Stabilität.

Beim Abbau einer ausgedienten Windkraftanlage stellt die Entsorgung des Flügels aufgrund der eingesetzten Fasern allerdings Probleme dar. Konkret besteht das Problem bei der Entsorgung der Flügel darin, dass die Kohlenstofffasern beim Entsorgungsprozess freigelegt werden und in die Umgebung gelangen können. Durch das Einatmen der Fasern können ernsthafte gesundheitliche Probleme entstehen.

Aus der WO 2010/148418 A1 ist ein Verfahren zur Entsorgung von glasfaserverstärkten Bauteilen bekannt, bei dem insbesondere Rotorblätter von Windkraftanlagen als alternativer Brennstoff einem Klinkerherstellungsprozess zugeführt werden. Die DE 10 2015 219 412 A1 offenbart eine Vorrichtung zum Zerteilen von großen Bauteilen aus Faserverbundmaterial, insbesondere von Rotorblättern von Windkraftanlagen. Weitere Lösungen zur Aufbereitung bzw. zum Recycling von Rotorblättern von Windkraftanlagen werden in der DE 10 2019 007 654 A1 und in der DE 10 2010 046 685 A1 beschrieben. Dass Pellets, insbesondere aus kohlenstofffaserverstärkten Kunststoffen, als Zuschlagstoff für metallurgische Prozesse eingesetzt werden können, beschreibt die DE 10 2017 212 583 A1.

Der Erfindung liegt daher die **Aufgabe** zugrunde, ein Verfahren der eingangs genannten Art so fortzubilden, dass aus der Entsorgung der Flügel von Windkraftanlagen eine Nutzung ohne gesundheitliche Gefährdung gezogen werden kann. Gleichermaßen soll das Fasermaterial der Flügel einer vorteilhaften Nutzung zugeführt werden.

Die **Lösung** dieser Aufgabe durch die Erfindung ist dadurch gekennzeichnet, dass das Verfahren die Schritte aufweist:
a) Zuführen des Flügels zu einer mechanischen Bearbeitungseinheit;
b) Abscheren oder Absägen von Teilen des Flügels in der mechanischen Bearbeitungseinheit mittels einer Schere oder einer Säge;
c) Versiegeln zumindest eines Abschnitts der Scher- oder Sägefläche des Teils durch Aufbringung eines Hilfsstoffs in der mechanischen Bearbeitungseinheit;
d) Ausbringen der Teile aus der mechanischen Bearbeitungseinheit;
e) Verbringen der Teile zu einer schmelzmetallurgischen Anlage, in der eine metallische Schmelze erzeugt wird;
f) Einbringen einer Anzahl von Teilen in die metallische Schmelze.

Die mechanische Bearbeitungseinheit ist bevorzugt hermetisch von der Umgebung abgeschlossen. Der hermetische Abschluss kann dabei durch eine Eingangsschleuse und eine Ausgangsschleuse hergestellt werden, die mit einer Absaugung von Luft ausgestattet ist. Weiterhin ist bevorzugt auch die gesamte mechanische Bearbeitungseinheit mit einer Absaugung versehen, um den Austritt von Fasermaterial in die Umgebung zu verhindern.

Die Schere kann hydraulisch, pneumatisch oder elektrisch betrieben werden.

Die Versiegelung der Scher- oder Sägestelle des Teils des Flügels gemäß obigem Schritt c) erfolgt bevorzugt durch Aufbringung des Hilfsstoffs in Form einer (insbesondere sprühfähigen) Versiegelungsflüssigkeit, insbesondere eines Lacks oder eines Harzes. Die Aufbringung des Hilfsstoffs, d. h. insbesondere des Lacks oder des Harzes, erfolgt bevorzugt durch einen Roboter. Die in Rede stehenden Flügel mit ihren Kohlenstofffasern (CFK) weisen zumeist eine Harzbindung auf, so dass die Versiegelungsflüssigkeit möglichst mit diesen Materialien kompatibel gewählt wird.

Die mechanische Bearbeitungseinheit kann eine Absaugung umfassen, die mit dem Arbeitsraum der mechanischen Bearbeitungseinheit in luftdichtem Kontakt steht und in der die aus dem Arbeitsraum abgesaugte Luft gefiltert wird.

Die mechanische Bearbeitungseinheit ist bevorzugt als mobile, transportable Einheit ausgebildet. Dies ermöglicht es, die Einheit unmittelbar neben der abzubauenden Windkraftanlage zu platzieren, um die dort vorgesehenen Arbeitsschritte auszuführen.

Durch das Abscheren oder Absägen von Teilen des Flügels und anschließendes Versiegeln der Schnittstelle, vorzugsweise mit einer schnell trocknenden Versiegelungsflüssigkeit, wird sichergestellt, dass keine Fasern in die Umgebung gelangen können. Anschließend erfolgt ein emissionsfreies Abschmelzen der Teile (d. h. der Flügelstücke) in einer Metallschmelze.

Die schmelzmetallurgische Anlage ist bevorzugt als Induktionsofen ausgebildet. In der schmelzmetallurgischen Anlage ist bevorzugt eine (Basis)Schmelze, die aus kohlenstoffarmem Schrott hergestellt wird; in diese werden die Teile des Flügels eingebracht. Hiermit kann Recyclingroheisen erzeugt werden.

Durch das Einbringen von Teilen in die Schmelze kann der Kohlenstoffanteil im Flügel zur Erzeugung des Recyclingroheisens genutzt werden, so dass dieser in den Wirtschaftskreislauf zurückkehren kann.

Die Schmelze wird beim Einschmelzen der Teile der Flügel bevorzugt auf einer Temperatur von mindestens 1.500 °C gehalten.

Ferner kann vorgesehen werden, dass die Verweilzeit des in die Schmelze eingebrachten bzw. in diese abgesenkten Teils (d. h. zumindest des Abschnitts des abgescherten Teils des Flügels, der in die Schmelze eintaucht) mindestens 15 Minuten, bevorzugt mindestens 30 Minuten, beträgt. Die Zeit hängt dabei von der Geometrie des Teils, aber auch von der Gesamtkomposition des Materials der Schmelze und des Flügels ab.

Im metallurgischen Gefäß erfolgt der Schmelzprozess mit ausreichender Temperatur sowie ausreichender Zeit, um das Faser-Material chemisch in die Schmelze zu integrieren. Da die Fasern aus Kohlenstoff bestehen, kann der aufgeschmolzene vorzugsweise kohlenstoffarme Schrott den Kohlenstoff der Faser bis zu seiner Sättigung aufnehmen. Demgemäß wird durch den Einsatz der Kohlenstofffasern aus dem Flügel eine Substitution von primären Kohlenstoffträgern möglich. Durch die beschriebene Vorgehensweise entfällt jedoch vorteilhaft jegliche gesundheitliche Gefährdung durch die Fasern.

Für die Aufbringung des Hilfsstoffs wird vorzugsweise, wie erwähnt, ein Lack eingesetzt. Dieser sollte schnelltrocknend sein. Wenn dieser mit einem Roboter auf die Scherstelle aufgebracht wird, können Maßnahmen getroffen werden, damit für das Aufsprühen des Lacks erforderliche Düsen nicht verkleben. Hier kann beispielsweise ins Auge gefasst werden, die Sprühdüsen zu beheizen. Der Lack wird dabei von einem Vorratstank zur Sprühdüse gefördert. Die geringen Mengen an Lack sind für den weiteren metallurgischen Prozess nicht relevant.

Die Schmelze im metallurgischen Gefäß wird bevorzugt aus einem kohlenstoffarmen Schrott hergestellt. Hier eignet sich besonders geschnittener Besäumschrott der Coilseiten aus Kaltwalzwerken (sogenannter Schnibbelschrott). Dieses Material ist insbesondere Feinblech für PKW-Karosserien.

Das Einschmelzen der Teile des Flügels erfolgt, bis eine Kohlenstoff-Sättigung der Schmelze eintritt, sie also keinen Kohlenstoff mehr aufnehmen kann. Die Schmelze kann dann ganz oder teilweise abgegossen werden; anschließend wird das metallurgische Gefäß wieder mit Schrott gefüllt, dieser geschmolzen und Flügel-Teile in der Schmelze versenkt. Als Produkt entsteht kohlenstoffhaltiges Recyclingroheisen.

Die Teile des Flügels können beispielsweise mittels eines Krans oder durch Hubsäulen in das metallurgische Gefäß eingebracht werden. Das Teil des Flügels wird beispielsweise durch eine hydraulische Zange gefasst und dann in das Gefäß abgesenkt.

Im schmelzmetallurgischen Gefäß können Drehfelder ausgebildet werden, um die Schmelze im Gefäß zu bewegen. Die Drehfelder können dabei so ausgebildet werden, dass das heißeste Material oben in der Mitte eine "Glatze" bildet, also dort keine Schlacke ist. Gegebenenfalls kann diese Stelle mit zusätzlicher Energie (beispielsweise mittels eines Brenners) beaufschlagt werden, um den Prozess zu unterstützen.

Der Bereich des schmelzmetallurgischen Gefäßes kann auch wieder mit einer Absaugung bzw. Filterung versehen werden, um vorsorglich den Austritt von Fasern zu unterbinden.

Der Schrott (Schnibbel), eventuell zusammen mit unlegierten Spänen, können bei angehobener Haube des Gefäßes über eine Vibrationsrinne zugegeben werden, bis eine hinreichende Menge Material im Gefäß ist und dadurch ein ausreichender Badspiegel erreicht ist. Dann wird die Haube abgesenkt und durch eine Öffnung in derselben die Teile des Flügels eingeführt.

Ein Vorteil der vorgeschlagenen Lösung besteht darin, dass die Zerkleinerung des Flügels durch den vorgeschlagenen Scherprozess sowie die anschließende Versiegelung (vorzugsweise mit einem Lack) die Gesundheitsgefahren minimiert. Dieser Vorgang wird vorzugsweise vor Ort an der abzubauenden Windkraftanlage durchgeführt. Hier werden dann die einzelnen abgescherten und versiegelten Teile der einzelnen Flügel der Windkraftanlage gesammelt und gestapelt und dann hin zur schmelzmetallurgischen Anlage abtransportiert. Dort erfolgt dann das Einschmelzen der Teile der Flügel in die Metallschmelze.

Somit kann die Freisetzung feiner Fasern praktisch vollständig vermieden werden. Gleichzeitig kann der Kohlenstoff des zu verwertenden Materials vorteilhaft eingesetzt werden. Das bevorzugte Endprodukt des erwähnten metallurgischen Prozesses ist kohlenstoffhaltiges Recyclingroheisen.

Was die Wahl der Größe der Teile des Flügels anbelangt, in die der Flügel geteilt wird und die durch den Scherprozess erzeugt werden, ist fachmännisch vorzugehen. Die Größe der Teile richtet sich unter anderem nach der Größe eines Containers, mit dem die versiegelten Teile von der Bearbeitungseinheit zur schmelzmetallurgischen Anlage transportiert werden. Ferner wird vorteilhaft hier bereits die Größe der Öffnung der schmelzmetallurgischen Anlage berücksichtigt, über die die einzelnen Teile ins Innere der schmelzmetallurgischen Anlage verbracht werden.

In diesem Zusammenhang kann es sinnvoll sein, den Flügel nicht nur in transportfähige Längen zu teilen, sondern auch ein Längsscheren oder -sägen (und entsprechendes Versiegeln) vorzusehen, wenn das Flügelteil so dick ist, dass es zwar problemlos zur schmelzmetallurgischen Anlage transportiert werden kann, dort aber nicht ohne weiteres durch die genannte Öffnung der schmelzmetallurgischen Anlage ins Innere der Anlage eingebracht werden kann.

Als weitere Maßnahme kann auch vorgesehen werden, dass an der schmelzmetallurgischen Anlage vor Ort noch einmal eine Teilung eines Flügelteils (mit entsprechender Versiegelung) vorgenommen wird, um die optimale Größe für die Verarbeitung des Flügelteils in der Anlage zu haben.

In der Zeichnung ist ein Ausführungsbeispiel der Erfindung dargestellt. Es zeigen:
- Fig. 1: schematisch eine mechanische Bearbeitungseinheit, in der ein Flügel einer Windkraftanlage in Teile zerlegt wird, die hinter der Bearbeitungseinheit gestapelt werden, und
- Fig. 2: schematisch eine schmelzmetallurgische Anlage in Form eines Induktionsofens, in der Schrott aufgeschmolzen wird, wobei in die Schmelze die Teile der Flügel eingebracht werden.

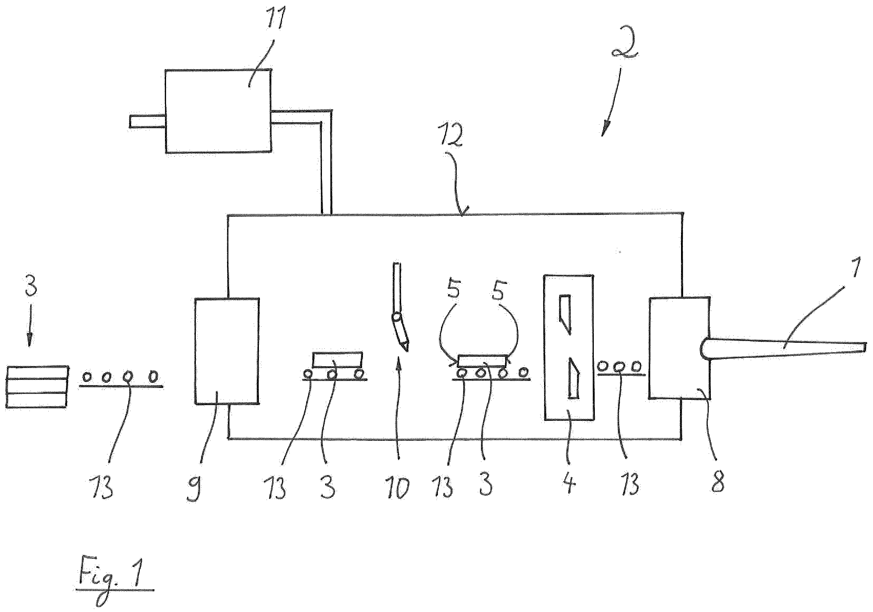

In Figur 1 ist eine mechanische Bearbeitungseinheit 2 angedeutet, die mobil ist und die neben einer Windkraftanlage verbracht werden kann, deren Flügel zu verwerten sind.

Die Bearbeitungseinheit 2 weist einen Arbeitsraum 12 auf, der hermetisch abgeschlossen ist. Demgemäß ist dafür Sorge getragen, dass Partikel bzw. Stäube aus dem Inneren des Arbeitsraums 12 nicht in die Umgebung gelangen können. Zu diesem Zweck weist die Bearbeitungseinheit 2 eine Eingangsschleuse 8 sowie eine Ausgangsschleuse 9 auf. Aus dem Bereich der Schleusen 8, 9 wird (was nicht näher dargestellt ist) Luft abgesaugt und gefiltert. Weiterhin ist zu erkennen, dass der Arbeitsraum 12 mit einer Absaugung 11 verbunden ist. Die Absaugung saugt Luft aus dem Inneren des Arbeitsraums 12 ab und gibt diese gefiltert an die Umgebung ab. Demgemäß können keine Partikel und namentlich keine kanzerogenen Fasern, die sich im Flügel 1 befinden, in die Umwelt gelangen.

Zur Verwertung wird ein Flügel 1 der Windkraftanlage der Bearbeitungseinheit 2 durch die Eingangsschleuse 8 zugeführt (in Figur 1 von rechts). Zum Fördern des Flügels 1 bzw. der Teile desselben sind Rollgänge 13 an den benötigten Stellen vorgesehen.

Der Flügel 1 wird mittels einer Schere 4 im Inneren der Bearbeitungseinheit 2 in Teile 3 geteilt. Der Scherprozess ist grundsätzlich gut dazu geeignet, wenig Fasermaterial aus dem Flügel bzw. dessen Teilen freizusetzen. Dennoch wird ergänzend hinter der Schere ein Versiegelungsprozess durchgeführt, bei dem die Scherfläche 5 eines Teils 3 des Flügels 1 mit einem Lack versehen wird. Der Lack wird durch einen Roboter 10 aufgebracht. Es handelt sich hierbei um einen schnelltrocknenden Lack, der die Scherflächen 5 schnell und zuverlässig versiegelt.

Hinter der Bearbeitungseinheit 2 werden (in Figur 1 links) die einzelnen Teile 3 des Flügels gesammelt bzw. gestapelt. Durch die Versiegelung mit der Versiegelungsflüssigkeit, insbesondere mit dem Lack, besteht nunmehr keine Gefahr einer Gesundheits- und Umweltbelastung mehr.

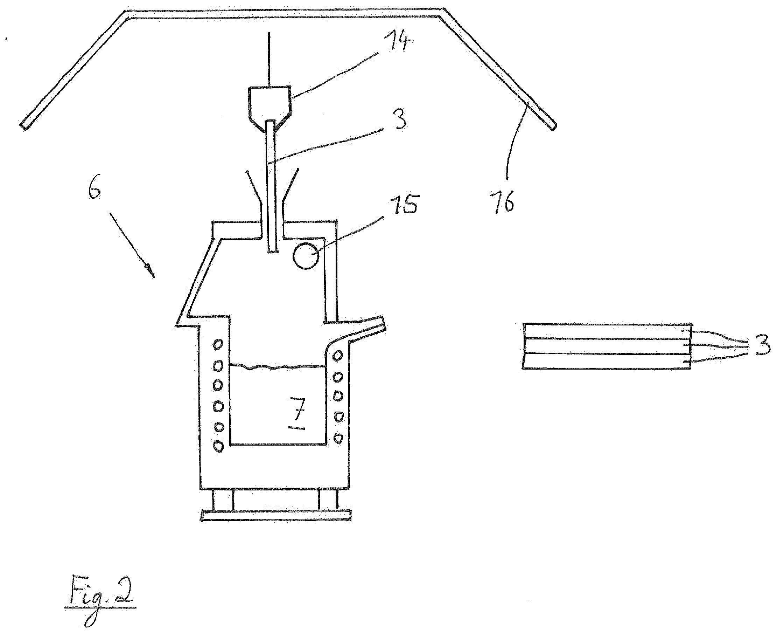

Die Teile 3 werden nun zu einer schmelzmetallurgischen Anlage 6 verbracht, die in Figur 2 dargestellt ist. Bei der Anlage 6 handelt es sich im Ausführungsbeispiel um einen Induktionsofen. Die Anlage 6 ist mit Schrott befüllt, der in ihr aufgeschmolzen ist. Die metallische Schmelze 7 befindet sich in der Anlage 6.

Nunmehr werden mittels einer Hubvorrichtung 14 einzelne Teile 3 des Flügels 1 durch eine nur schematisch angedeutet Öffnung in die schmelzmetallurgischen Anlage 6 eingebracht. Die Teile 3 schmelzen in der Anlage 6 auf. Namentlich werden die Kohlenstofffasern abgeschmolzen, so dass der Kohlenstoff in die Schmelze gelangt. Dies erfolgt gegebenenfalls bis zum Sättigungsgrad des Eisens mit Kohlenstoff.

Nicht dargestellt, allerdings optional vorgesehen können auch Zusatzheizungen werden. Diese können insbesondere an der Eintauchstelle des Flügels in die Schmelze platziert werden. Hier kann beispielsweise ein Brenner vorgesehen werden, der mit einem gezielten Sauerstoffstrahl punktuell die Temperatur erhöht, um so eine schnellere Auflösung des Fasermaterials zu erreichen.

Durch eine nur schematisch angedeutete Primärabsaugung 15 im Induktionsofen 6 sowie 1 Sekundärabsaugung 16 (in Form einer Einhausung des Ofens 6) wird sichergestellt, dass auch im Bereich der schmelzmetallurgischen Anlage 6 kein Fasermaterial in die Umgebung gelangen kann.

In dieser Art und Weise kann nicht nur der mit Kohlenstofffasern versehene Flügel einer Windkraftanlage ohne Belastung der Umwelt verwertet werden; vielmehr kann der sich im Flügel befindliche Kohlenstoff vorteilhaft zur Anreicherung der metallischen Schmelze und damit zur Erzeugung von Recyclingroheisen eingesetzt werden.

### Bezugszeichenliste:

- 1: Flügel einer Windkraftanlage
- 2: mechanische Bearbeitungseinheit
- 3: Teil des Flügels
- 4: Schere / Säge
- 5: Scherfläche/Sägefläche des Teils des Flügels
- 6: schmelzmetallurgische Anlage
- 7: metallische Schmelze
- 8: Eingangsschleuse
- 9: Ausgangsschleuse
- 10: Roboter
- 11: Absaugung
- 12: Arbeitsraum der mechanischen Bearbeitungseinheit
- 13: Rollgang / Förderelement
- 14: Hubvorrichtung
- 15: Primärabsaugung
- 16: Sekundärabsaugung (mit Einhausung/Haube)

## Patentansprüche

1. Verfahren zum Verwerten eines Flügels (1) einer Windkraftanlage, wobei der Flügel (1) zwecks Verstärkung Kohlenstofffasern aufweist,
**dadurch gekennzeichnet, dass**
das Verfahren die Schritte umfasst:
a) Zuführen des Flügels (1) zu einer mechanischen Bearbeitungseinheit (2);
b) Abscheren oder Absägen von Teilen (3) des Flügels (1) in der mechanischen Bearbeitungseinheit (2) mittels einer Schere (4) oder einer Säge;
c) Versiegeln zumindest eines Abschnitts der Scher- oder Sägefläche (5) des Teils (3) durch Aufbringung eines Hilfsstoffs in der mechanischen Bearbeitungseinheit (2);
d) Ausbringen der Teile (3) aus der mechanischen Bearbeitungseinheit (2);
e) Verbringen der Teile (3) zu einer schmelzmetallurgischen Anlage (6), in der eine metallische Schmelze (7) erzeugt wird;
f) Einbringen einer Anzahl von Teilen (3) in die metallische Schmelze (7).

2. Verfahren nach Anspruch 1, **dadurch gekennzeichnet, dass** die mechanische Bearbeitungseinheit (2) hermetisch von der Umgebung abgeschlossen ist.

3. Verfahren nach Anspruch 2, **dadurch gekennzeichnet, dass** der hermetische Abschluss durch eine Eingangsschleuse (8) und eine Ausgangsschleuse (9) hergestellt wird, die mit einer Absaugung von Luft ausgestattet ist.

4. Verfahren nach einem der Ansprüche 1 bis 3, **dadurch gekennzeichnet, dass** die Schere (4) hydraulisch, pneumatisch oder elektrisch betrieben wird.

5. Verfahren nach einem der Ansprüche 1 bis 4, **dadurch gekennzeichnet, dass** die Versiegelung gemäß Schritt c) von Anspruch 1 durch Aufbringung des Hilfsstoffs in Form einer Versiegelungsflüssigkeit, insbesondere eines Lacks oder eines Harzes, erfolgt.

6. Verfahren nach Anspruch 5, **dadurch gekennzeichnet, dass** die Aufbringung des Hilfsstoffs durch einen Roboter (10) erfolgt.

7. Verfahren nach einem der Ansprüche 1 bis 6, **dadurch gekennzeichnet, dass** die mechanische Bearbeitungseinheit (2) eine Absaugung (11) umfasst, die mit dem Arbeitsraum (12) der mechanischen Bearbeitungseinheit (2) in luftdichtem Kontakt steht und in der die aus dem Arbeitsraum (12) abgesaugte Luft gefiltert wird.

8. Verfahren nach einem der Ansprüche 1 bis 7, **dadurch gekennzeichnet, dass** die mechanische Bearbeitungseinheit (2) als mobile, transportable Einheit ausgebildet ist.

9. Verfahren nach einem der Ansprüche 1 bis 8, **dadurch gekennzeichnet, dass** die schmelzmetallurgische Anlage (6) als Induktionsofen ausgebildet ist.

10. Verfahren nach einem der Ansprüche 1 bis 9, **dadurch gekennzeichnet, dass** in der schmelzmetallurgischen Anlage (6) eine Schmelze aus einem kohlenstoffarmen Schrott hergestellt wird, in die die Teile (3) eingebracht werden.

11. Verfahren nach einem der Ansprüche 1 bis 10, **dadurch gekennzeichnet, dass** die Schmelze auf einer Temperatur von mindestens 1.500 °C gehalten wird.
